# EUROPÄISCHE PATENTANMELDUNG

(11) **EP 4 663 272 A1**
(43) Veröffentlichungstag der Anmeldung: **17.12.2025**
(21) Anmeldenummer: 25176292.8
(22) Anmeldetag: 14.05.2025
(51) Int. Cl.: B01D 53/04, B01D 53/06

(54) **DAC-ANLAGE**

(30) Priorität: 14.06.2024 DE 102024116744
(71) Anmelder: Everllence SE, 86153 Augsburg (DE)
(72) Erfinder: Weber, Stephan, 45699 Herten (DE); Behnke, Klaus, 69198 Schriesheim (DE)

(57) **Zusammenfassung**

DAC-Anlage (10) zur Gewinnung von Kohlenstoffdioxid aus Umgebungsluft, mit einem ersten Luft-Strömungskanal (11) für Umgebungsluft, aus welcher Kohlenstoffdioxid gewonnen werden soll, mit einem System (12) zur Trocknung der Umgebungsluft, aus welcher Kohlenstoffdioxid gewonnen werden soll, mit einer Kohlenstoffdioxidgewinnungsvorrichtung (13) zur Gewinnung des Kohlenstoffdioxids aus der getrockneten Umgebungsluft, mit einem zweiten Luft-Strömungskanal (14) für Abluft der Kohlenstoffdioxidgewinnungsvorrichtung (13). Das System (12) zur Trocknung der Umgebungsluft weist mindestens einen ersten rotierenden Speicherkörper (12a, 12b) aufweist, der ein Adsorptionsmittel für Wasser trägt, wobei der jeweilige erste rotierende Speicherkörper (12a, 12b) derart rotierend antreibbar ist, dass in Folge seiner Rotation Segmente (15, 16) desselben zeitweise mit dem ersten Luft-Strömungskanal (11) und zweitweise mit dem zweiten Luft-Strömungskanal (14) in strömungsseitiger Wirkverbindung stehen. Die Kohlenstoffdioxidgewinnungsvorrichtung (13) weist mindestens einen zweiten rotierenden Speicherkörper (13a) aufweist, der ein Adsorptionsmittel für Kohlenstoffdioxid trägt, wobei der jeweilige zweite rotierende Speicherkörper (13a) derart rotierend antreibbar ist, dass in Folge seiner Rotation Segmente (18, 19, 20) desselben zeitweise mit dem ersten Luft-Strömungskanal (11) und zweitweise mit einem Trägergas-Strömungskanal (17) in strömungsseitiger Wirkverbindung stehen. Fig. 1

## Beschreibung

Die Erfindung betrifft eine DAC-Anlage zur Gewinnung von Kohlenstoffdioxid aus Umgebungsluft.

DAC-Anlagen dienen der Gewinnung von Kohlenstoffdioxid aus Umgebungsluft. DAC ist die Abkürzung für Direct Air Capture. Zur Gewinnung von Kohlenstoffdioxid aus der Umgebungsluft strömt bei aus der Praxis bekannten DAC-Anlagen die Umgebungsluft durch eine Kohlenstoffdioxidgewinnungsvorrichtung, welche aus der Umgebungsluft Kohlenstoffdioxid gewinnt. Die Kohlenstoffdioxidgewinnungsvorrichtung einer DAC-Anlage, welche dazu dient aus der Umgebungsluft Kohlenstoffdioxid zu gewinnen, kann auf unterschiedlichen Wirkmechanismen beruhen. So sind aus der Praxis Kohlenstoffdioxidgewinnungsvorrichtung von DAC-Anlagen bekannt, die auf dem Prinzip der physikalischen Adsorption, chemischen Adsorption, elektrochemischen Separation, auf Trennverfahren mittels Membranen oder auch auf dem Prinzip der kryogenen Abtrenntechnik beruhen. Insbesondere dann, wenn die Kohlenstoffdioxidgewinnungsvorrichtung einer DAC-Anlage auf dem Prinzip der physikalischen Adsorption beruht, also als Adsorptionsmittel einen Physisorbenten nutzt, ist es von Wichtigkeit, dass die Umgebungsluft vorab getrocknet wird. Daher verfügen DAC-Anlagen, deren Kohlenstoffdioxidgewinnungsvorrichtung insbesondere auf dem Prinzip der physikalischen Adsorption beruhen, über ein System, um die Umgebungsluft vor der Zuleitung derselben zur Kohlenstoffdioxidgewinnungsvorrichtung und damit vor der Gewinnung des Kohlenstoffdioxids zu trocknen. Zur Trocknung von Umgebungsluft sind aus der Praxis verschiedene Verfahren bekannt. So kann aus der Umgebungsluft Wasser bzw. Wasserdampf durch Abkühlung der Umgebungsluft unterhalb der Taupunkttemperatur auskondensiert werden. Andere Lufttrocknungsverfahren können das Prinzip der Physisorption nutzen, um also zur Lufttrocknung über physikalische Adsorption Wasser aus der Luft zumindest teilweise zu entfernen.

Aus dem Artikel "Investigation of Desiccants and CO2 Sorbens for Exploration Systems 2016-2017, James C. Knox et al., 47th International Conference on Environmental Systems, 16-20 Juli 2017, Charleston, South Carolina, USA (ICES-2017-188)" ist eine Anlage zur zumindest teilweisen Entfernung von Kohlenstoffdioxid aus Luft für den Einsatz in der Raumfahrt bekannt. Bei dieser Anlage wird Luft, aus welcher Kohlenstoffdioxid zumindest teilweise entfernt werden soll, zunächst getrocknet und anschließend über eine Kohlenstoffdioxidgewinnungsvorrichtung geführt. Sowohl die Trocknung der Luft als auch die Separation des Kohlenstoffdioxids aus der Luft beruht dabei auf dem Prinzip der Physisorption. Die Trocknung der Luft beruht dabei auf der Nutzung eins Feststoffsorptionsbetts im sogenannten Temperaturschwingverfahren. Dies ist sehr energieintensiv.

US 2023 / 0 182 067 A1 offenbart eine Trocknungseinrichtung mit einem rotierenden Speicherkörper. US 2005 / 0 217 481 A1 offenbart eine Einrichtung zur Trocknung, Reinigung und Separation von Gasen mit einem rotierenden Adsorbenten. Weiterhin wird auf die EP 3 431 890 B1 verwiesen.

Hiervon ausgehend liegt der Erfindung die Aufgabe zu Grunde, eine neuartige DAC-Anlage zu schaffen.

Diese Aufgabe wird durch eine DAC-Anlage nach Anspruch 1 gelöst.

Bei der erfindungsgemäßen DAC-Anlage zur Gewinnung von Kohlenstoffdioxid aus Umgebungsluft weist das System zur Trocknung der Umgebungsluft mindestens einen ersten rotierenden Speicherkörper auf, der ein Adsorptionsmittel für Wasser trägt, wobei der jeweilige erste rotierende Speicherkörper derart rotierend antreibbar ist, dass in Folge seiner Rotation Segmente desselben zeitweise mit dem ersten Luft-Strömungskanal und zweitweise mit dem zweiten Luft-Strömungskanal in strömungsseitiger Wirkverbindung stehen.

Bei der erfindungsgemäßen DAC-Anlage zur Gewinnung von Kohlenstoffdioxid aus Umgebungsluft weist die Kohlenstoffdioxidgewinnungsvorrichtung mindestens einen zweiten rotierenden Speicherkörper auf, der ein Adsorptionsmittel für Kohlenstoffdioxid trägt, wobei der jeweilige zweite rotierende Speicherkörper derart rotierend antreibbar ist, dass in Folge seiner Rotation Segmente desselben zeitweise mit dem ersten Luft-Strömungskanal und zweitweise mit einem Trägergas-Strömungskanal in strömungsseitiger Wirkverbindung stehen.

Die erfindungsgemäße DAC-Anlage wiest das System zur Trocknung der Umgebungsluft auf, welches den mindestens einen ersten rotierenden Speicherkörper aufweist, der ein Adsorptionsmittel für Wasser trägt.

Der jeweilige erste rotierende Speicherkörper ist derart rotierend antreibbar, dass in Folge seiner Rotation Segmente desselben zeitweise mit dem ersten Luft-Strömungskanal und zweitweise mit dem zweiten Luft-Strömungskanal in Wirkverbindung sind, um dann, wenn eines der Segmente des jeweiligen rotierenden ersten Speicherkörpers mit dem ersten Luft-Strömungskanal in strömungsseitiger Wirkverbindung steht, Wasser durch das Adsorptionsmittel des jeweiligen Segments des jeweiligen rotierenden ersten Speicherkörpers aus der zu trocknenden Umgebungsluft aufzunehmen, und um dann, eines der Segmente des jeweiligen rotierenden ersten Speicherkörpers mit zweiten Luft-Strömungskanal in strömungsseitiger Wirkverbindung steht, Wasser von dem Adsorptionsmittel des jeweiligen Segments des jeweiligen rotierenden ersten Speicherkörpers an die Abluft der Kohlenstoffdioxidgewinnungsvorrichtung abzugeben.

Die erfindungsgemäße DAC-Anlage wiest ferner die Kohlenstoffdioxidgewinnungsvorrichtung auf, die mindestens den einen zweiten rotierenden Speicherkörper aufweist, der ein Adsorptionsmittel für Kohlenstoffdioxid trägt.

Der jeweilige zweite rotierende Speicherkörper ist derart rotierend antreibbar, dass in Folge seiner Rotation Segmente desselben zeitweise mit dem ersten Luft-Strömungskanal und zweitweise mit dem zweiten Luft-Strömungskanal Trägergas-Strömungskanal in Wirkverbindung sind, um dann, wenn eines der Segmente (des jeweiligen rotierenden zweiten Speicherkörpers mit dem ersten Luft-Strömungskanal in strömungsseitiger Wirkverbindung steht, Kohlenstoffdioxid durch das Adsorptionsmittel des jeweiligen Segments des jeweiligen rotierenden zweiten Speicherkörpers aus der getrockneten Umgebungsluft aufzunehmen, und um wenn eines der Segmente des jeweiligen rotierenden zweiten Speicherkörpers mit dem Trägergas-Strömungskanal in strömungsseitiger Wirkverbindung steht, Kohlenstoffdioxid vom Adsorptionsmittel des jeweiligen Segments des jeweiligen rotierenden zweiten Speicherkörpers an das Trägergas abzugeben.

Die erfindungsgemäße DAC-Anlage erlaubt eine effiziente Gewinnung von Kohlenstoffdioxid aus Umgebungsluft. Dabei kann Kohlenstoffdioxid aus Umgebungsluft in einem kontinuierlichen, quasistationären Prozess gewonnen werden. Ein bislang erforderlicher Batch-Prozess kann so vermieden werden. Die erfindungsgemäße DAC-Anlage benötigt wenig Bauraum und Baugruppen. Auch wird eine geringe Adsorbentmenge zur Adsorption sowohl des Wassers aus der Umgebungsluft als auch des Kohlenstoffdioxids aus der getrockneten Umgebungsluft benötigt.

Nach einer ersten Variante der erfindungsgemäßen DAC-Anlage ist der jeweilige zweite rotierende Speicherkörper derart rotierend antreibbar, dass in Folge seiner Rotation die Segmente desselben zeitweise mit dem ersten Luft-Strömungskanal, danach zweitweise mit dem Trägergas-Strömungskanal, danach zweitweise mit dem zweiten Luft-Strömungskanal und danach wieder zeitweise mit dem ersten Luft-Strömungskanal in strömungsseitiger Wirkverbindung stehen. Dann, wenn eines der Segmente des jeweiligen rotierenden zweiten Speicherkörpers mit dem zweiten Luft-Strömungskanal in strömungsseitiger Wirkverbindung steht, wird das Adsorptionsmittel des jeweiligen Segments des jeweiligen zweiten rotierenden Speicherkörpers gekühlt und/oder getorcknet.

Nach der ersten Variante der erfindungsgemäßen DAC-Anlage weist dieselbe vorzugsweise einen Umlenkströmungskanal auf, um Luft ausgehend von dem mit dem ersten Luft-Strömungskanal in strömungsseitiger Wirkverbindung stehenden Segment des jeweiligen rotierenden zweiten Speicherkörpers der Kohlenstoffdioxidgewinnungsvorrichtung in Richtung auf das dem zweiten Luft-Strömungskanal in strömungsseitiger Wirkverbindung stehende Segment des jeweiligen rotierenden zweiten Speicherkörpers der Kohlenstoffdioxidgewinnungsvorrichtung umzulenken.

Die erste Variante der erfindungsgemäßen DAC-Anlage ist dann bevorzugt, wenn als Trägergas insbesondere Wasserdampf genutzt wird.

Nach einer zweiten Variante der erfindungsgemäßen DAC-Anlage ist der jeweilige zweite rotierende Speicherkörper der Kohlenstoffdioxidgewinnungsvorrichtung derart rotierend antreibbar, dass in Folge seiner Rotation Segmente desselben zeitweise mit dem ersten Luft-Strömungskanal und danach zweitweise mit dem Trägergas-Strömungskanal und danach wieder zeitweise mit dem ersten Luft-Strömungskanal in strömungsseitiger Wirkverbindung stehen.

Nach der zweiten Variante der erfindungsgemäßen DAC-Anlage steht dann, wenn eines der Segmente des jeweiligen zweiten rotierende Speicherkörpers der Kohlenstoffdioxidgewinnungsvorrichtung mit dem ersten Luft-Strömungskanal in strömungsseitiger Wirkverbindung steht, dasselbe Segment des jeweiligen zweiten rotierende Speicherkörpers der Kohlenstoffdioxidgewinnungsvorrichtung auch unmittelbar mit dem zweiten Luft-Strömungskanal in strömungsseitiger Wirkverbindung steht.

Die zweite Variante der erfindungsgemäßen DAC-Anlage ist dann bevorzugt, wenn als Trägergas insbesondere Wasserstoff genutzt wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine stark schematisierte Darstellung einer ersten erfindungsgemäßen DAC-Anlage,
- Fig. 2: eine stark schematisierte Darstellung einer zweiten erfindungsgemäßen DAC-Anlage.

Eine DAC-Anlage 10 weist einen ersten Luft-Strömungskanal 11 auf, wobei dieser erste Luft-Strömungskanal 11 der Führung von Umgebungsluft dient, aus welcher Kohlenstoffdioxid gewonnen werden soll.

Die DAC-Anlage 10 weist weiterhin ein System 12 zur Trocknung der Umgebungsluft, aus welcher Kohlenstoffdioxid gewonnen werden soll, auf, wobei das System 12 zur Trocknung der Umgebungsluft mindestens einen ersten rotierenden Speicherkörper 12a, 12b aufweist, der ein Adsorptionsmittel für Wasser trägt.

Im gezeigten Ausführungsbeispiel sind zwei erste rotierende Speicherkörper 12a, 12b zur Trocknung der Umgebungsluft vorhanden, die jeweils ein Adsorptionsmittel für Wasser tragen und in Reihe hintereinandergeschaltet sind.

Die DAC-Anlage 10 weist weiterhin eine Kohlenstoffdioxidgewinnungsvorrichtung 13 auf, die der Gewinnung des Kohlenstoffdioxids aus der getrockneten Umgebungsluft dient. Die Kohlenstoffdioxidgewinnungseinrichtung 13 weist mindestens einen zweiten rotierenden Speicherkörper 13a, der ein Adsorptionsmittel für Kohlenstoffdioxid trägt.

Im gezeigten Ausführungsbeispiel weist die Kohlenstoffdioxidgewinnungsvorrichtung 13 einen einzigen rotierenden Speicherkörper 13a mit einem Adsorptionsmittel für Kohlenstoffdioxid auf.

Die DAC-Anlage 10 weist weiterhin einen zweiten Luft-Strömungskanal 14 für Abluft der Kohlenstoffdioxidgewinnungsvorrichtung 13 auf.

Wie bereits ausgeführt, weist das System 12 zur Trocknung der Umgebungsluft mindestens einen ersten rotierenden Speicherkörper 12a, 12b auf. Der jeweilige erste rotierende Speicherkörper 12a, 12b ist derart rotierend antreibbar, dass infolge seiner Rotation Segmente 15, 16 desselben zeitweise mit dem ersten Luft-Strömungskanal 11 und zweitweise mit dem zweiten Luft-Strömungskanal 14 in strömungsseitiger Wirkverbindung stehen.

Dann, wenn eines der Segmente 15, 16 des jeweiligen ersten rotierenden Speicherkörpers 12a, 12b mit dem ersten Luft-Strömungskanal 11 in strömungsseitiger Wirkverbindung steht, ist dasselbe vorzugsweise im ersten Luft-Strömungskanal 11 positioniert. Dann, wenn eines der Segmente 15, 16 des jeweiligen ersten rotierenden Speicherkörpers 12a, 12b mit dem zweiten Luft-Strömungskanal 14 in strömungsseitiger Wirkverbindung steht, ist dasselbe vorzugsweise im zweiten Luft-Strömungskanal 14 positioniert.

Dann, wenn eines der Segmente 15, 16 des jeweiligen ersten rotierenden Speicherkörpers 12a, 12b mit dem ersten Luft-Strömungskanal 11 in strömungsseitiger Wirkverbindung steht, steht das andere der Segmente 15, 16 des jeweiligen ersten rotierenden Speicherkörpers 12a, 12b vorzugsweise mit dem zweiten Luft-Strömungskanal 14 in strömungsseitiger Wirkverbindung.

Dann, wenn ein jeweiliges Segment 15, 16 des jeweiligen rotierenden ersten Speicherkörpers 12a, 12b im ersten Luft-Strömungskanal 11 positioniert sind, kann Wasser durch das Adsorptionsmittel des jeweiligen Segments 15, 16 des ersten rotierenden Speicherkörpers 12, 12a aus der zu trocknenden Umgebungsluft aufgenommen werden.

Dann, wenn das jeweilige Segmente 15, 16 des jeweiligen rotierenden ersten Speicherkörpers 12a, 12b im zweiten Luft-Strömungskanal 14 positioniert sind, kann Wasser vom Adsorptionsmittel des jeweiligen Segments 15, 16 des jeweiligen ersten rotierenden Speicherkörpers 12a, 12b an die Abluft der Kohlenstoffdioxidgewinnungsvorrichtung 13 abgegeben werden.

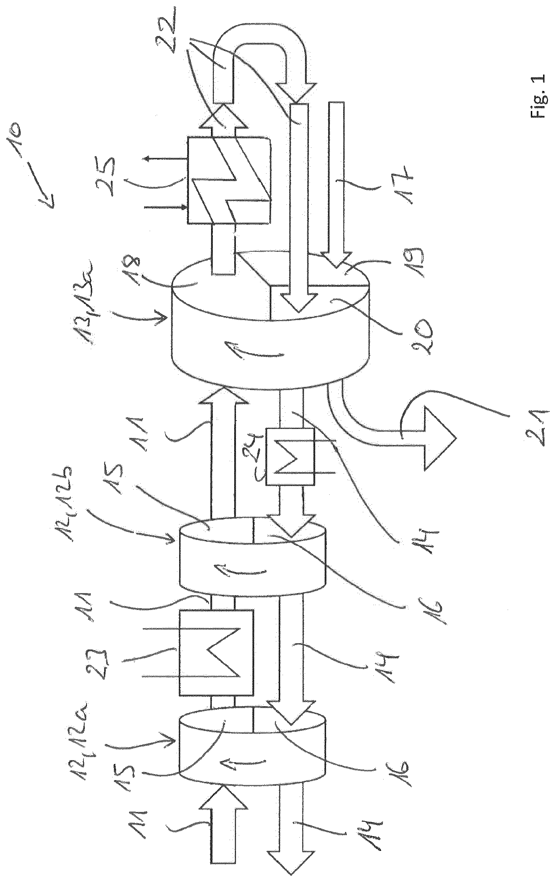

Der in Fig. 1 gezeigte zweite rotierende Speicherkörper 13a der Kohlenstoffdioxidgewinnungsvorrichtung 13 ist ebenfalls rotierend antreibbar, und zwar derart, dass infolge seiner Rotation Segmente 18, 19, 20 desselben zeitweise mit dem ersten Luft-Strömungskanal 11 und zweitweise mit einem Trägergas-Strömungskanal 17 in strömungsseitiger Wirkverbindung stehen.

Dann, wenn eines der Segmente 18, 19, 20 des jeweiligen zweiten rotierenden Speicherkörpers 13a mit dem ersten Luft-Strömungskanal 11 in strömungsseitiger Wirkverbindung steht, ist dasselbe vorzugsweise im ersten Luft-Strömungskanal 11 positioniert. Dann, wenn eines der Segmente 18, 19, 20 des jeweiligen zweiten rotierenden Speicherkörpers 13a mit dem Trägergas-Strömungskanal 17 in strömungsseitiger Wirkverbindung steht, ist dasselbe vorzugsweise Trägergas-Strömungskanal 17 positioniert.

Dann, wenn ein jeweiliges Segment 18, 19, 20 des zweiten rotierenden Speicherkörpers 13a im ersten Luft-Strömungskanal 11 positioniert ist bzw. mit demselben in strömungsseitiger Wirkverbindung steht, kann Kohlenstoffdioxid durch das Adsorptionsmittel des jeweiligen Segments des rotierenden zweiten Speicherkörpers 13a aus der getrockneten Umgebungsluft aufgenommen werden.

Dann, wenn das jeweilige Segment 18, 19, 20 des zweiten rotierenden Speicherkörpers 13a im Trägergas-Strömungskanal 17 positioniert ist bzw. mit demselben in strömungsseitiger Wirkverbindung steht, kann das Kohlenstoffdioxid vom Adsorptionsmittel des jeweiligen Segments des rotierenden zweiten Speicherkörpers 13a an das Trägergas abgegeben werden.

Im Ausführungsbeispiel der Fig. 1 weist der rotierende zweite Speicherkörper 13a der Kohlenstoffdioxidgewinnungsvorrichtung 13 drei Segmente 18, 19 und 20 auf, wobei der zweite rotierende Speicherkörper 13a der Kohlenstoffdioxidgewinnungsvorrichtung 13 der Fig. 1 derart rotierend antreibbar ist, dass in Folge seiner Rotation die Segmente 18, 19, 20 desselben zeitweise mit dem ersten Luft-Strömungskanal 11, danach zweitweise mit dem Trägergas-Strömungskanal 17, danach zweitweise mit dem zweiten Luft-Strömungskanal 14 und danach wieder zeitweise mit dem ersten Luft-Strömungskanal 17 in strömungsseitiger Wirkverbindung stehen.

Dann, wenn eines der Segmente 18, 19, 20 des rotierenden zweiten Speicherkörpers 13a der Kohlenstoffdioxidgewinnungsvorrichtung 13 mit dem zweiten Luft-Strömungskanal 14 in strömungsseitiger Wirkverbindung steht, wird das Adsorptionsmittel des jeweiligen mit dem zweiten Luft-Strömungskanal 14 in strömungsseitiger Wirkverbindung stehenden Segments des zweiten rotierenden Speicherkörpers 13a gekühlt und/oder getrocknet.

Ist das jeweilige Segment 18, 19, 20 des rotierenden zweiten Speicherkörpers 13a im ersten Luft-Strömungskanal 11 angeordnet bzw. steht in strömungsseitiger Wirkverbindung mit denselben, so nimmt das Adsorptionsmittel des jeweiligen Segments 18, 19, 20 des zweiten rotierenden Speicherkörpers 13a Kohlenstoffdioxid aus der getrockneten Umgebungsluft auf.

Ist das jeweilige Segment 18, 19, 20 des rotierenden zweiten Speicherkörpers 13a im Trägergas-Strömungskanal 17 angeordnet bzw. steht in strömungsseitiger Wirkverbindung mit denselben, so gibt das Adsorptionsmittel des jeweiligen Segments 18, 19, 20 des rotierenden zweiten Speicherkörpers 13 Kohlenstoffdioxid an das Trägergas ab, sodass über eine Ableitung 21 ein Gemisch aus Trägergas und Kohlenstoffdioxid abströmt.

Beim Trägergas handelt es sich um ein kohlenstoffdioxidfreies Trägergas, in Fig. 1 insbesondere um Wasserdampf.

Dann, wenn in Fig. 1 das jeweilige Segment 18, 19, 20 des rotierenden zweiten Speicherkörpers 13a im Bereich des zweiten Luftströmungskanals 14 angeordnet ist bzw. in strömungsseitiger Wirkverbindung mit denselben steht, ist das Adsorptionsmittel des jeweiligen Segments des zweiten rotierenden Speicherkörpers 13 kühlbar und/oder trockenbar, wobei dann hierzu gemäß Fig. 1 Luft über einen Umlenkströmungskanal 22 vom ersten Luft-Strömungskanal 11 in Richtung auf den zweiten Luft-Strömungskanal 14 umgelenkt wird, und zwar stromaufwärts der Kohlenstoffdioxidgewinnungsvorrichtung 13. Über den Umlenkströmungskanal 22 wird Luft ausgehend von dem mit dem ersten Luft-Strömungskanal 11 in strömungsseitiger Wirkverbindung stehenden Segment 18, 29, 20 des rotierenden zweiten Speicherkörpers 13a der Kohlenstoffdioxidgewinnungsvorrichtung 13 in Richtung auf das dem zweiten Luft-Strömungskanal 14 in strömungsseitiger Wirkverbindung stehende Segment 18, 19, 20 des rotierenden zweiten Speicherkörpers 13a der Kohlenstoffdioxidgewinnungsvorrichtung 13 umgelenkt. Dann, wenn eines der Segmente 18, 19, 20 des zweiten rotierende Speicherkörpers 13a der Kohlenstoffdioxidgewinnungsvorrichtung 13 mit dem ersten Luft-Strömungskanal 11 in strömungsseitiger Wirkverbindung steht, steht dieses Segment über den Umlenkströmungskanal 22 mit einem anderen der Segmente des zweiten rotierenden Speicherkörpers 13a, welches mit dem zweiten Luft-Strömungskanal 14 in strömungsseitiger Wirkverbindung steht, in strömungsseitiger Wirkverbindung.

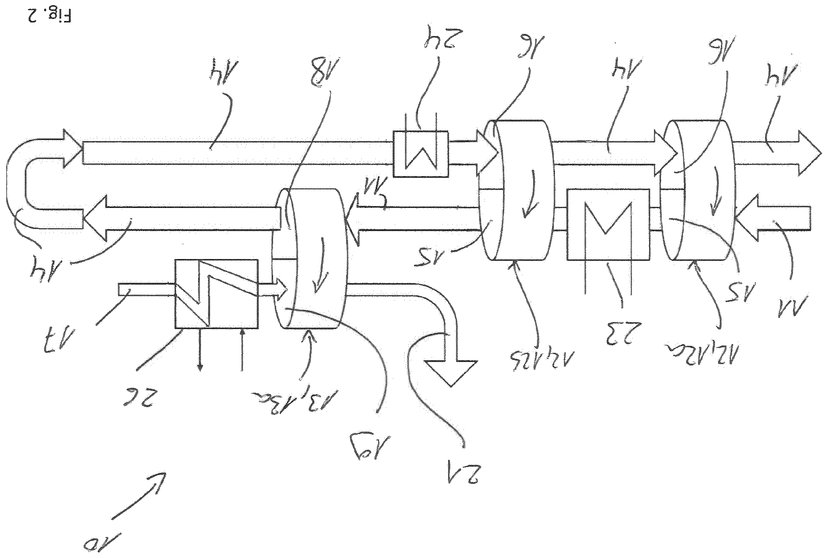

Demgegenüber zeigt Fig. 2 eine Variante einer DAC-Anlage 10, bei welcher der zweite rotierende Speicherkörper 13a der Kohlenstoffdioxidgewinnungsvorrichtung 13 lediglich zwei Segmente 18, 19 aufweist, wobei der zweite rotierende Speicherkörper 13a derart rotierend antreibbar ist, dass infolge seiner Rotation die Segmente 18, 19 desselben zeitweise im ersten Luft-Strömungskanal 11 und zeitweise im Trägergas-Strömungskanal 17 angeordnet sind. Diese Variante ist insbesondere dann bevorzugt, wenn als Trägergas Wasserstoff genutzt wird und keine Trocknung des Adsorptionsmittels des zweiten rotierenden Speicherkörpers 13a erforderlich ist.

Dann, wenn in Fig. 2 eines der Segmente 18, 19 des zweiten rotierenden Speicherkörpers 13a der Kohlenstoffdioxidgewinnungsvorrichtung 13 mit dem ersten Luft-Strömungskanal 11 in strömungsseitiger Wirkverbindung steht, steht dieses Segment 18, 19 des jeweiligen zweiten rotierenden Speicherkörpers 13a der Kohlenstoffdioxidgewinnungsvorrichtung 13 auch unmittelbar mit dem zweiten Luft-Strömungskanal 14 in strömungsseitiger Wirkverbindung. Dieses Segment ist dann sowohl im ersten Luft-Strömungskanal 11 und gleichzeitig auch im zweiten Luft-Strömungskanal 14 angeordnet.

Im Bereich der ersten rotierenden Speicherkörper 12a, 12b des Systems 12 zur Trocknung der Umgebungsluft kommt als Adsorptionsmittel vorzugsweise ein Adsorptionsmittel zur Physisorption von Wasser zum Einsatz, welches zum Beispiel ein Silicagel oder auch ein Zeolith sein kann.

Im zweiten rotierenden Speicherkörper 13a der Kohlenstoffdioxidgewinnungsvorrichtung 13 kommt als Adsorptionsmittel vorzugsweise ein Adsorption zur Physisorption oder Chemisorption zum Einsatz, wobei ein Chemisorbent in einem MOF aufgenommen sein kann.

In der Kohlenstoffdioxidgewinnungsvorrichtung 13 basiert die Desorption, nämlich die Abgabe des Kohlenstoffdioxids auf das Trägergas, im Wesentlichen auf einem unterschiedlichen CO₂-Partialdruck zwischen dem Partialdruck im Adsorptionsmittel und dem Partialdruck im Trägergas.

In Fig. 1 und 2 weist das System 12 zur Trocknung der Umgebungsluft die beiden rotierenden Speicherkörper 12a, 12b auf, wobei zwischen dieselben im Bereich des ersten Luft-Strömungskanals 11 eine Heizeinrichtung 23 zur Erwärmung der zu trocknenden Umgebungsluft zwischen den beiden ersten rotierenden Speicherkörpern 12a, 12b vorgesehen ist. Diese Heizeinrichtung 23 ist optional.

Im Ausführungsbeispiel der Fig. 1 und 2 ist stromaufwärts des rotierenden Speicherkörpers 12b jeweils eine Kühleinrichtung 24 gezeigt, um die Abluft der Kohlenstoffdioxidgewinnungsvorrichtung 13 zu kühlen. Die Kühleinrichtung 24 ist dabei optional.

Im Ausführungsbeispiel der Fig. 1 ist dem Umlenkströmungskanal 22 eine Heizeinrichtung 25 zugeordnet, um das über die Kohlenstoffdioxidgewinnungsvorrichtung 13 umgelenkte Luft zu erwärmen. In Fig. 2 hingegen ist eine Heizeinrichtung 26 dem Trägergas-Strömungskanal 17 zugeordnet, um das Trägergas stromaufwärts der Kohlenstoffdioxidgewinnungsvorrichtung 13 zu erwärmen.

Die erfindungsgemäße DAC-Anlage 10 nutzt demnach im Bereich des Systems 12 zur Trocknung der Umgebungsluft sowie im Bereich der Kohlenstoffdioxidgewinnungsvorrichtung 13 jeweils mindestens einen rotierenden Speicherkörper. Der jeweilige rotierende Speicherkörper trägt ein Adsorptionsmittel, und zwar im Bereich des mindestens einen ersten rotierenden Speicherkörpers 12, 12b des Systems 12 zur Trocknung der Umgebungsluft ein Adsorptionsmittel für Wasser und im Bereich des rotierenden Speicherkörpers 13a der Kohlenstoffdioxidgewinnungsvorrichtung 13 ein Adsorptionsmittel zur Adsorption von CO₂.

Die erfindungsgemäße DAC-Anlage dient der kontinuierlichen Gewinnung von Kohlenstoffdioxid aus Umgebungsluft in einem quasistationären Verfahren.

Der Platzbedarf der DAC-Anlage 10 ist gering, es werden wenige Baugruppen benötigt, ferner ist die Menge des benötigten Adsorptionsmittels gering.

Es ist eine effiziente Gewinnung von Kohlenstoffdioxid CO₂ aus Umgebungsluft möglich.

### Bezugszeichenliste

- 10: DAC-Anlage
- 11: erster Luft-Strömungskanal
- 12: System zur Trocknung von Umgebungsluft
- 12a: erster Speicherkörper
- 12b: erster Speicherkörper
- 13: Kohlenstoffdioxidgewinnungsvorrichtung
- 13a: zweiter Speicherkörper
- 14: zweiter Luft-Strömungskanal
- 15: Segmente
- 16: Segmente
- 17: Trägergas-Strömungskanal
- 18: Segmente
- 19: Segmente
- 20: Segmente
- 21: Ableitung
- 22: Umlenkströmungskanal
- 23: Heizeinrichtung
- 24: Kühleinrichtung
- 25: Heizeinrichtung
- 26: Heizeinrichtung

## Patentansprüche

1. DAC-Anlage (10) zur Gewinnung von Kohlenstoffdioxid aus Umgebungsluft,
mit einem ersten Luft-Strömungskanal (11) für Umgebungsluft, aus welcher Kohlenstoffdioxid gewonnen werden soll,
mit einem System (12) zur Trocknung der Umgebungsluft, aus welcher Kohlenstoffdioxid gewonnen werden soll,
mit einer Kohlenstoffdioxidgewinnungsvorrichtung (13) zur Gewinnung des Kohlenstoffdioxids aus der getrockneten Umgebungsluft,
mit einem zweiten Luft-Strömungskanal (14) für Abluft der Kohlenstoffdioxidgewinnungsvorrichtung (13), **dadurch gekennzeichnet, dass**
das System (12) zur Trocknung der Umgebungsluft mindestens einen ersten rotierenden Speicherkörper (12a, 12b) aufweist, der ein Adsorptionsmittel für Wasser trägt, wobei der jeweilige erste rotierende Speicherkörper (12a, 12b) derart rotierend antreibbar ist, dass in Folge seiner Rotation Segmente (15, 16) desselben zeitweise mit dem ersten Luft-Strömungskanal (11) und zweitweise mit dem zweiten Luft-Strömungskanal (14) in strömungsseitiger Wirkverbindung stehen,
die Kohlenstoffdioxidgewinnungsvorrichtung (13) mindestens einen zweiten rotierenden Speicherkörper (13a) aufweist, der ein Adsorptionsmittel für Kohlenstoffdioxid trägt, wobei der jeweilige zweite rotierende Speicherkörper (13a) derart rotierend antreibbar ist, dass in Folge seiner Rotation Segmente (18, 19, 20) desselben zeitweise mit dem ersten Luft-Strömungskanal (11) und zweitweise mit einem Trägergas-Strömungskanal (17) in strömungsseitiger Wirkverbindung stehen.

2. DAC-Anlage (10) nach Anspruch 1, **dadurch gekennzeichnet, dass**
dann, wenn eines der Segmente (15, 16) des jeweiligen rotierenden ersten Speicherkörpers (12a, 12b) mit dem ersten Luft-Strömungskanal (11) in strömungsseitiger Wirkverbindung steht, das Adsorptionsmittel des jeweiligen Segments (15, 16) des jeweiligen rotierenden ersten Speicherkörpers Wasser aus der zu trocknenden Umgebungsluft aufnimmt,
dann, eines der Segmente (15, 16) des jeweiligen rotierenden ersten Speicherkörpers (12a, 12b) mit zweiten Luft-Strömungskanal (14) in strömungsseitiger Wirkverbindung steht, das Adsorptionsmittel des jeweiligen Segments des jeweiligen rotierenden ersten Speicherkörpers Wasser an die Abluft der Kohlenstoffdioxidgewinnungsvorrichtung (13) abgibt.

3. DAC-Anlage (10) nach Anspruch 1 oder 2, **dadurch gekennzeichnet, dass**
dann, wenn eines der Segmente (18, 19, 20) des jeweiligen rotierenden zweiten Speicherkörpers (13a) mit dem ersten Luft-Strömungskanal (11) in strömungsseitiger Wirkverbindung steht, das Adsorptionsmittel des jeweiligen Segments des jeweiligen rotierenden zweiten Speicherkörpers (13a) Kohlenstoffdioxid aus der getrockneten Umgebungsluft aufnimmt,
dann, wenn eines der Segmente (18, 19, 20) des jeweiligen rotierenden zweiten Speicherkörpers (13a) mit dem Trägergas-Strömungskanal (17) in strömungsseitiger Wirkverbindung steht, das Adsorptionsmittel des jeweiligen Segments des jeweiligen rotierenden zweiten Speicherkörpers (13a) Kohlenstoffdioxid an das Trägergas abgibt.

4. DAC-Anlage (10) nach einem der Ansprüche 1 bis 3, **dadurch gekennzeichnet, dass**
der jeweilige zweite rotierende Speicherkörper (13a) derart rotierend antreibbar ist, dass in Folge seiner Rotation die Segmente (18, 19, 20) desselben zeitweise mit dem ersten Luft-Strömungskanal (11), danach zweitweise mit dem Trägergas-Strömungskanal (17), danach zweitweise mit dem zweiten Luft-Strömungskanal (14) und danach wieder zeitweise mit dem ersten Luft-Strömungskanal (17) in strömungsseitiger Wirkverbindung stehen,
um dann, wenn eines der Segmente (18, 19, 20) des jeweiligen rotierenden zweiten Speicherkörpers (13a) mit dem zweiten Luft-Strömungskanal (14) in strömungsseitiger Wirkverbindung steht, das Adsorptionsmittel des jeweiligen mit dem zweiten Luft-Strömungskanal (14) in strömungsseitiger Wirkverbindung stehenden Segments des jeweiligen zweiten rotierenden Speicherkörpers (13a) zu kühlen und/oder zu trocknen.

5. DAC-Anlage (10) nach Anspruch 4, **gekennzeichnet durch**
einen Umlenkströmungskanal (22), um Luft ausgehend von dem mit dem ersten Luft-Strömungskanal (11) in strömungsseitiger Wirkverbindung stehenden Segment des jeweiligen rotierenden zweiten Speicherkörpers (13a) der Kohlenstoffdioxidgewinnungsvorrichtung (13) in Richtung auf das dem zweiten Luft-Strömungskanal (14) in strömungsseitiger Wirkverbindung stehende Segment des jeweiligen rotierenden zweiten Speicherkörpers (13a) der Kohlenstoffdioxidgewinnungsvorrichtung (13) umzulenken.

6. DAC-Anlage (10) nach Anspruch 5, **dadurch gekennzeichnet, dass**
dann, wenn eines der Segmente (18, 19, 20) des jeweiligen zweiten rotierende Speicherkörpers (13a) der Kohlenstoffdioxidgewinnungsvorrichtung (13) mit dem ersten Luft-Strömungskanal (11) in strömungsseitiger Wirkverbindung steht, dasselbe Segment über den Umlenkströmungskanal (22) mit einem anderen der Segmente (18, 19, 20) des jeweiligen zweiten rotierende Speicherkörpers (13a) der Kohlenstoffdioxidgewinnungsvorrichtung (13) in strömungsseitiger Wirkverbindung steht, nämlich mit demjenigen Segment, das mit dem zweiten Luft-Strömungskanal (14) in strömungsseitiger Wirkverbindung steht.

7. DAC-Anlage (10) nach Anspruch 4, 5 oder 6 **dadurch gekennzeichnet, dass**
das Trägergas Wasserdampf ist.

8. DAC-Anlage (10) nach einem der Ansprüche 1 bis 3, **dadurch gekennzeichnet, dass**
der jeweilige zweite rotierende Speicherkörper (13a) der Kohlenstoffdioxidgewinnungsvorrichtung (13) derart rotierend antreibbar ist, dass in Folge seiner Rotation Segmente (18, 19) desselben zeitweise mit dem ersten Luft-Strömungskanal (11) und danach zweitweise mit dem Trägergas-Strömungskanal (17) und danach wieder zeitweise mit dem ersten Luft-Strömungskanal (11) in strömungsseitiger Wirkverbindung stehen.

9. DAC-Anlage (10) nach Anspruch 8, **gekennzeichnet durch**
dann, wenn eines der Segmente (18, 19) des jeweiligen zweiten rotierende Speicherkörpers (13a) der Kohlenstoffdioxidgewinnungsvorrichtung (13) mit dem ersten Luft-Strömungskanal (11) in strömungsseitiger Wirkverbindung steht, dasselbe Segment des jeweiligen zweiten rotierenden Speicherkörpers (13a) der Kohlenstoffdioxidgewinnungsvorrichtung (13) auch unmittelbar mit dem zweiten Luft-Strömungskanal (14) in strömungsseitiger Wirkverbindung steht.

10. DAC-Anlage (10) nach Anspruch 8 oder 9, **dadurch gekennzeichnet, dass**
das Trägergas Wasserstoff ist.

11. DAC-Anlage (10) nach einem der Ansprüche 1 bis 10, **dadurch gekennzeichnet, dass**
das System (12) zur Trocknung der Umgebungsluft mehrere in Reihe geschaltete erste rotierende Speicherkörper (12a, 12b) aufweist,
im ersten Luft-Strömungskanal (11) zwischen zwei in Reihe geschalteten ersten rotierenden Speicherkörpern (12a, 12b) eine Heizeinrichtung (23) zur Erwärmung der Umgebungsluft angeordnet ist.

12. DAC-Anlage (10) nach einem der Ansprüche 1 bis 11, **dadurch gekennzeichnet, dass**
im zweiten Luft-Strömungskanal (14) stromabwärts des oder jedes zweiten rotierenden Speicherkörpers (13a) und stromaufwärts des oder jedes ersten rotierenden Speicherkörpers (12a, 12b) eine Kühleinrichtung (24) zur Kühlung der Abluft der Kohlenstoffdioxidgewinnungsvorrichtung (13) angeordnet ist.

13. DAC-Anlage (10) nach einem der Ansprüche 1 bis 12, **dadurch gekennzeichnet, dass**
der jeweilige erste Speicherkörpers (12a, 12b) ein Adsorptionsmittel zur Physisorption von Wasser trägt.

14. DAC-Anlage (10) nach einem der Ansprüche 1 bis 13, **dadurch gekennzeichnet, dass**
der jeweilige zweite Speicherkörpers (13a) ein Adsorptionsmittel zur Physisorption oder Chemisorption von Kohlenstoffdioxid trägt.

15. DAC-Anlage (19) nach einem der Ansprüche 1 bis 14, **dadurch gekennzeichnet, dass**
dieselbe zur kontinuierlichen Gewinnung von Kohlenstoffdioxid aus Umgebungsluft eingerichtet ist.
